# DEMANDE DE BREVET EUROPEEN

(11) **EP 4 843 856 A1**
(43) Date de publication de la demande: **25.11.2026**
(21) Numéro de dépôt: 26176311.4
(22) Date de dépôt: 04.05.2026
(51) Int. Cl.: B60W 30/18

(54) **PROCÉDÉ ET DISPOSITIF DE CONTRÔLE D'UN RETOUR D'UN VÉHICULE SUR UNE VOIE DE CIRCULATION PENDANT UN CHANGEMENT DE VOIE DE CIRCULATION**

(30) Priorité: 22.05.2025 FR 2505521
(71) Demandeur: Stellantis Auto SAS, 78300 Poissy (FR)
(72) Inventeur: BOUHAL, Ayoub, 20270 SIDI MAAROUF (MA); LALAOUI-RHALI, Oussama, 20270 SIDI MAAROUF (MA); NOUSSI, Karim, 20270 SIDI MAAROUF (MA); REZZOUKI, Youssef, 20270 SIDI MAAROUF (MA)
(74) Mandataire: ESIP

(57) **Abrégé**

La présente invention concerne un procédé de contrôle d'un retour d'un véhicule (11) sur une voie de circulation pendant un changement de voie de circulation initié par un système de changement semi-automatique de voie de circulation, ledit procédé étant mis en œuvre par un processeur et comprenant les étapes suivantes :
- détermination d'une accélération centripète dudit véhicule (11) en fonction d'un rayon de courbure de ladite voie de circulation et d'une vitesse longitudinale courante dudit véhicule (11) ;
- détermination d'une marge d'accélération latérale pour ledit retour par calcul d'une différence entre ladite accélération centripète et une valeur de seuil de confort ;
- contrôle de ladite vitesse longitudinale courante dudit véhicule (11) en fonction de ladite marge d'accélération latérale.

## Description

### Domaine technique

L'invention concerne les procédés et dispositifs de contrôle d'un retour d'un véhicule sur une voie de circulation pendant un changement de voie de circulation initié par un système de changement semi-automatique de voie de circulation, notamment mais non exclusivement pour un véhicule automobile. L'invention concerne également un procédé et dispositif de contrôle d'une vitesse longitudinale d'un véhicule lors d'un retour sur une voie de circulation.

### Arrière-plan technologique

Les véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de changement semi-automatique de voie de circulation, dit système SALC (de l'anglais « Semi-Automatic Lane Change ») a pour fonction première d'assister le conducteur d'un véhicule lorsque le conducteur souhaite changer de voie de circulation. A la détection de l'activation des clignotants d'un côté du véhicule pour indiquer son intention de changer de voie depuis une voie de circulation courante vers une voie de circulation cible du côté où les clignotants ont été activés par le conducteur, le système SALC opère le changement de voie après avoir effectués quelques contrôles. Parmi ces contrôles, le système SALC vérifie certaines conditions relatives à la voie de circulation cible telles que :
- la qualité de la détection des lignes de marquage au sol séparant la voie de circulation courante et la voie de circulation cible, cette qualité devant être supérieure à un seuil pour autoriser le changement de voie semi-automatique ;
- le type associé à cette ligne, la ligne de marquage au sol devant être de type discontinue pour autoriser le changement semi-automatique de voie de circulation ;
- une probabilité d'existence de la ligne de marquage au sol de type discontinue, une telle probabilité devant être supérieure à un seuil pour autoriser le changement de voie semi-automatique ;
- la présence d'autres véhicules dans la voie de circulation cible.

Si les conditions de changement de voie sont vérifiées, le système SALC déclenche la manœuvre. Au cours de celle-ci, il est possible qu'un véhicule circulant à haute vitesse sur la voie de circulation cible soit détecté par le véhicule et nécessite l'interruption de la manœuvre de changement de voie. Le système SALC déclenche alors un retour vers la trajectoire centrale de la voie initiale.

Cependant, dans certaines situations, lorsque cette manœuvre de retour automatique du véhicule vers la trajectoire centrale de la voie initiale est déclenchée durant une circulation du véhicule dans une courbe, cette situation peut engendrer un inconfort pour les occupants. En effet, la courbure du virage entraine une correction de direction soudaine en réaction à l'interruption de la manœuvre ainsi qu'un niveau élevé de secousses latérales et d'instabilité, pour compenser l'accélération latérale. Cette accélération latérale est fonction de l'accélération centripète due à la vitesse du véhicule et à la courbe et l'accélération latérale ajoutée nécessaire pour rejoindre le centre de la voie de circulation initiale, selon la formule :

[Math 1] $ALAT = AC + AA$

Avec ALAT : accélération latérale totale, AC : accélération centripète et AA : accélération latérale ajoutée.

Lorsque le système réagit en temps réel à l'interruption de la manœuvre cette accélération latérale peut dépasser un seuil de confort, engendrant de l'instabilité et de l'inconfort pour les passagers.

### Résumé de la présente invention

Un objet de la présente invention est de résoudre au moins l'un des problèmes de l'arrière-plan technologique décrit précédemment.

Un objet de la présente invention est d'anticiper un retour sur la voie de circulation lors d'une annulation d'un changement de voie de circulation.

Un autre objet de la présente invention est de contrôler la vitesse du véhicule lors d'un retour sur la voie de circulation pour ne pas générer d'inconfort des passagers du véhicule.

Selon un premier aspect, la présente invention concerne un procédé de contrôle d'un retour d'un véhicule sur une voie de circulation pendant un changement de voie de circulation initié par un système de changement semi-automatique de voie de circulation, le procédé étant mis en œuvre par un processeur et comprenant les étapes suivantes :
- détermination d'une accélération centripète du véhicule en fonction d'un rayon de courbure de la voie de circulation et d'une vitesse longitudinale courante du véhicule ;
- détermination d'une marge d'accélération latérale pour le retour par calcul d'une différence entre l'accélération centripète et une valeur de seuil de confort ; et
- contrôle de la vitesse longitudinale courante du véhicule en fonction de la marge d'accélération latérale.

L'exécution du procédé pendant le changement de voie du véhicule permet d'anticiper le retour à la voie de circulation avant même que la décision d'annulation du changement de voie de circulation ne soit prise, par exemple par un calculateur du système SALC. La détermination de l'accélération centripète permet de prendre en compte la courbure de la voie de circulation et la vitesse longitudinale actuelle du véhicule. A partir de cette valeur, une marge d'accélération latérale disponible est calculée, permettant de savoir si l'accélération latérale est inférieure ou supérieure au seuil de confort. Le contrôle de la vitesse longitudinale en fonction de cette marge permet de planifier un retour progressif dans la voie en assurant le confort des passagers, sans compromettre la rapidité du retour dans la voie pour la fluidification du trafic et la sécurité des usagers de la route.

Selon une variante, lorsque la marge d'accélération latérale est positive, le contrôle correspond à une augmentation de la vitesse longitudinale courante du véhicule jusqu'à que la marge d'accélération latérale soit nulle.

Selon une autre variante, lorsque la marge d'accélération latérale est négative, le contrôle correspond à une diminution de la vitesse longitudinale courante du véhicule jusqu'à que la marge d'accélération soit nulle.

Selon une variante supplémentaire, lorsque la marge d'accélération latérale est nulle, le contrôle correspond à un maintien de ladite vitesse longitudinale courante du véhicule.

Selon encore une variante, la valeur dudit seuil de confort est 2,5 m/s².

Selon une autre variante, ladite accélération centripète AC est calculée selon la formule :

[Math 2] $AC = \frac{{VLONG}^{2}}{R}$

Avec :
VLONG : la vitesse longitudinale courante du véhicule ; et
R : le rayon de courbure de la voie de circulation.

Selon un deuxième aspect, la présente invention concerne un dispositif de contrôle d'un retour d'un véhicule sur une voie de circulation pendant un changement de voie de circulation initié par un système de changement semi-automatique de voie de circulation, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement une manœuvre de changement de voie d'un véhicule, selon un exemple de réalisation particulier de la présente invention ;
[Fig. 2] illustre schématiquement un retour du véhicule de la figure 1 sur une voie de circulation, selon un exemple de réalisation particulier de la présente invention ;
[Fig. 3] illustre un dispositif configuré pour contrôler un retour sur une voie de circulation initiale du véhicule de la figure 1, selon un exemple de réalisation particulier et non limitatif de la présente invention.
[Fig. 4] illustre un organigramme des différentes étapes d'un procédé de contrôle d'un retour sur une voie de circulation du véhicule de la figure 1, selon un exemple de réalisation particulier et non limitatif de la présente invention.

### Description des exemples de réalisation

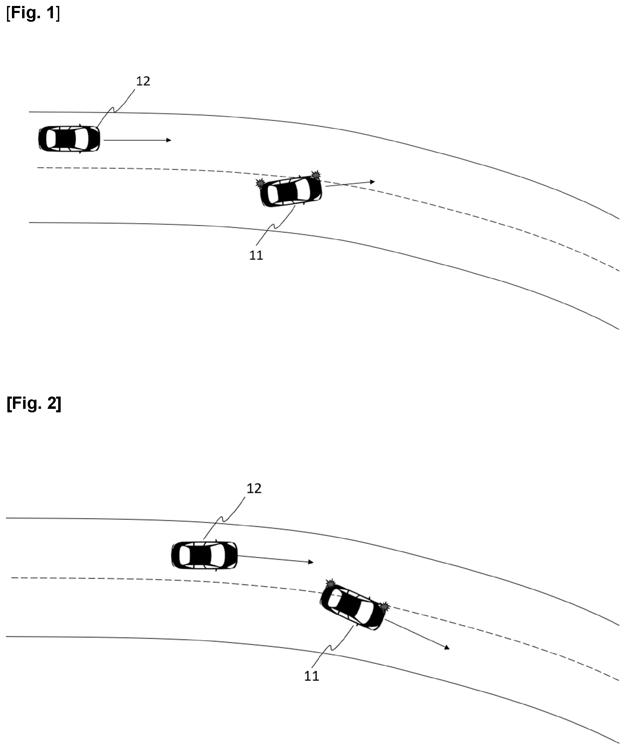

Un procédé et un dispositif de contrôle de trajectoire de retour à une voie de circulation initiale d'un véhicule vont maintenant être décrits dans ce qui va suivre en référence conjointement aux figures 1 à 3. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Selon un exemple particulier et non limitatif de réalisation de la présente invention, le contrôle d'un retour d'un véhicule sur une voie de circulation est mis en œuvre par un ou plusieurs calculateurs du véhicule, notamment par un ou plusieurs processeurs de ce ou ces calculateurs, par exemple le calculateur en charge du système SALC du véhicule.

La figure 1 illustre schématiquement un environnement routier dans lequel circule un véhicule 11, selon un exemple de réalisation particulier et non limitatif de la présente invention.

Le véhicule 11 correspond par exemple à un véhicule à moteur thermique, à moteur(s) électrique(s) ou encore un véhicule hybride avec un moteur thermique et un ou plusieurs moteurs électriques. Le véhicule 11 correspond ainsi par exemple à un véhicule terrestre, par exemple une automobile, un camion, un car.

Le véhicule 11 embarque en outre un système de changement semi-automatique de voie de circulation, dit système SALC (de l'anglais « Semi-Automatic Lane Change »). Un tel système est aussi connu sous le nom de système de changement de voie automatique (de l'anglais « Auto Lane Change »). Un tel système se base notamment sur un ensemble de capteurs et/ou de systèmes embarqués du véhicule 11 pour déterminer si la manœuvre de changement de voie peut être mise en œuvre ou non.

L'ensemble de capteurs et/ou de système embarqués comprend par exemple :
- un système de détection et de reconnaissance des lignes de marquage au sol pour déterminer des informations sur la présence de lignes au sol, pour classifier ces lignes en différentes catégories, par exemple pour déterminer si les lignes au sol correspondent à des lignes de type « continue » (avec un trait continu), « discontinue » (avec un trait en pointillés) ou « mixte » et pour obtenir des données ou indicateurs sur la qualité du tracé de ces lignes au sol à partir de données obtenues d'une caméra embarquée dans le véhicule 11 ;
- un ensemble de radars avant et arrière configuré pour détecter la présence de véhicules autour du véhicule 11, et notamment dans la voie de circulation cible (ou voie de circulation de destination) devant et derrière le véhicule 11, ainsi que leurs distances vis-à-vis du véhicule 11 ;
- un ensemble de capteurs intégrés dans le volant pour détecter la présence des mains du conducteur sur le volant du véhicule 11 ;
- un capteur configuré pour déterminer le couple appliqué sur le volant par le conducteur ;
- un système électronique de stabilité, dit système ESC (de l'anglais « Electronic Stability Control » ou en français « contrôle électronique de stabilité ») ou système ESP (de l'anglais « Electronic Stability Program » ou en français « programme de stabilité électronique ») comprenant un ensemble de capteurs tels que capteur de taux de lacet, capteurs d'accélération longitudinale et latérale et capteurs de vitesse de roue pour surveiller le comportement du véhicule 11 et sa trajectoire sur la route.

Le système SALC est configuré pour autoriser ou non le changement de voie d'une voie de circulation courante vers une voie de circulation cible adjacente à cette voie de circulation courante en fonction des données et informations obtenues de l'ensemble de capteurs et/ou systèmes embarqués tels que les capteurs et systèmes embarqués décrits précédemment. Lorsque le changement est autorisé, le système SALC contrôle la manœuvre permettant au véhicule 11 de changer de voie.

Le ou les systèmes ADAS (de l'anglais « Advanced Driver-Assistance System » ou en français « Système d'aide à la conduite avancé ») du véhicule 11 et les différents capteurs sont interconnectés et communiquent entre eux par l'intermédiaire d'un ou plusieurs bus de données du réseau embarqué du véhicule 11, lequel relie les calculateurs ou contrôleurs contrôlant notamment chacun des systèmes ADAS. Les calculateurs forment par exemple une architecture multiplexée pour la réalisation de différents services utiles pour le bon fonctionnement du véhicule 11 et pour assister le conducteur et/ou les passagers du véhicule dans le contrôle du véhicule 11. Ces calculateurs communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le véhicule 11 circule sur une portion de route comprenant au moins deux voies de circulation dans le sens de circulation dudit véhicule 11. La portion de route correspond par exemple à une portion d'autoroute ou une portion de route nationale comprenant une voie de dépassement dans le sens de circulation du véhicule 11.

Le nombre de voies de circulation de la portion de route est quelconque, par exemple égale à 2, 3, 4 ou 5 voies.

Selon l'exemple de la figure 1, le conducteur du véhicule 11 initie une manœuvre de changement de voie, pour passer de sa voie de circulation actuelle, sur la droite de la portion de route, vers la voie de circulation de gauche, par exemple pour dépasser un véhicule.

Les notions de droite et de gauche sont définies selon le sens de circulation du véhicule 11. La voie de circulation actuelle, de droite, correspond par exemple à la voie « la plus lente » et la voie de circulation de gauche correspond selon cet exemple à la voie « la plus rapide ». La voie « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

L'exemple de la figure 1 et de la figure 2 correspond à un exemple selon lequel les véhicules circulent à droite, comme en France. L'invention ne se limite cependant pas à un tel exemple et s'étend à toutes les configurations de route, incluant celles où les véhicules circulent à gauche.

Le véhicule 11 active ses feux clignotants pour signaler la manœuvre à venir. Le système SALC contrôle ensuite le déplacement du véhicule 11 pour le changement de voie.

Selon l'art antérieur, lorsqu'un véhicule, par exemple le véhicule 12 de la figure 1, est détecté sur la voie de circulation de gauche, par exemple par un ou plusieurs capteurs de perception du véhicule 11, le système SALC déclenche une annulation de la manœuvre semi-automatique de changement de voie, et contrôle un repositionnement du véhicule 11 dans sa voie de circulation initiale.

Le véhicule 11 effectue un retour sur sa voie de circulation initiale alors que la voie de circulation présente une courbe, comme illustré sur la figure 2. Selon l'art antérieur, le système SALC n'anticipe pas la présence de cette courbe, et la durée du retour sur la voie de circulation est plus allongée ou nécessite une accélération latérale plus importante qu'un retour en ligne droite, ce qui implique une manœuvre de retour présentant une accélération latérale abrupte nuisant au confort des passagers.

Un processus de contrôle d'un retour d'un véhicule sur une voie de circulation est mis en œuvre par un ou plusieurs processeurs, par exemple un ou plusieurs processeurs d'un calculateur du système SALC.

Dans une première opération du processus, une accélération centripète du véhicule 11 est déterminée en fonction d'un rayon de courbure de la voie de circulation et d'une vitesse longitudinale courante du véhicule 11.

Le rayon de courbure de la voie de circulation du véhicule 11 est par exemple déterminée par un calculateur du véhicule 11 traitant les données issues d'un ensemble de capteurs de perception du véhicule 11. Les capteurs de perception du véhicule 11 détectent une courbe de la voie de circulation du véhicule 11 et transmettent les données à un calculateur qui détermine le rayon de courbure.

La vitesse longitudinale courante du véhicule 11 est par exemple obtenue depuis un calculateur ADAS du véhicule 11.

Le calcul de l'accélération centripète prenant en compte le rayon de courbure et la vitesse longitudinale permet de connaitre en avance de phase la valeur de l'accélération centripète avant d'atteindre la courbe, et donc d'anticiper un retour à la voie de circulation.

Cette accélération centripète est appliquée au véhicule 11 lorsqu'il tourne, créant une force latérale sur le véhicule 11.

Selon une variante, l'accélération centripète AC est calculée selon la formule :

[Math 3] $AC = \frac{{VLONG}^{2}}{R}$
avec :
VLONG : ladite vitesse longitudinale courante du véhicule 11, et
R : le rayon de courbure de la voie de circulation.

Dans une deuxième opération du processus, une marge d'accélération latérale pour le retour est déterminée par calcul d'une différence entre l'accélération centripète et une valeur de seuil de confort.

La valeur seuil de confort correspond à une valeur d'accélération latérale totale ne devant pas être dépassée pour éviter un inconfort des passagers et pour assurer la stabilité du véhicule 11.

Selon une variante, la valeur du seuil de confort est de 2,5 m/s².

La valeur de l'accélération centripète, déjà calculée en fonction du rayon de courbure de la voie de circulation et de la vitesse longitudinale du véhicule 11, est soustraite de cette valeur seuil de confort pour définir une marge d'accélération latérale du véhicule 11.

Selon un mode de réalisation, la marge d'accélération latérale correspond à une variable d'ajustement pour l'accélération latérale totale subie par le véhicule 11, permettant d'anticiper et d'optimiser le retour du véhicule 11 sur sa voie de circulation selon la valeur de la marge d'accélération totale.

Dans une troisième opération du processus, la ladite vitesse longitudinale courante du véhicule 11 est contrôlée en fonction de la marge d'accélération latérale.

Selon une variante, lorsque la marge d'accélération latérale est positive, le contrôle correspond à une augmentation de la vitesse longitudinale courante du véhicule 11 jusqu'à que la marge d'accélération soit nulle.

Une marge d'accélération latérale positive signifie que l'accélération centripète du véhicule est inférieure au seuil d'inconfort, ainsi il est anticipé que l'accélération latérale totale de la manœuvre de retour selon la vitesse longitudinale actuelle assure le confort des occupants du véhicule. La vitesse longitudinale du véhicule peut donc être augmentée jusqu'à que la marge d'accélération soit nulle, car une augmentation de cette vitesse induit une réduction de la durée de retour sur la voie de circulation, permettant au véhicule 11 de libérer la voie de circulation de gauche rapidement, notamment pour éviter une collision avec le véhicule 12.

Selon une autre variante, lorsque la marge d'accélération latérale est négative, le contrôle correspond à une diminution de la vitesse longitudinale courante du véhicule jusqu'à que la marge d'accélération latérale soit nulle.

Une marge d'accélération latérale négative signifie que l'accélération centripète du véhicule est supérieure à la valeur du seuil, ainsi il est anticipé que l'accélération latérale totale de la manœuvre de retour selon la vitesse longitudinale actuelle n'assure pas le confort des occupants du véhicule 11. La vitesse longitudinale du véhicule peut donc être diminuée jusqu'à que la marge d'accélération soit nulle, car une diminution de cette vitesse longitudinale permet de diminuer l'accélération centripète et donc l'inconfort des occupants du véhicule 11.

Selon une variante supplémentaire, lorsque la marge d'accélération latérale est nulle, le contrôle correspond à un maintien de ladite vitesse longitudinale courante du véhicule 11.

Une valeur nulle de la marge d'accélération latérale indique que la vitesse longitudinale actuelle correspond à une accélération centripète égale à la valeur du seuil de confort, et permet donc d'anticiper que cette vitesse longitudinale peut être conservée pour assurer le confort des passagers du véhicule tout en minimisant la durée de la manœuvre de retour.

Selon un mode de réalisation, la marge d'accélération latérale permet de calculer une vitesse latérale VLAT du véhicule 11 nécessaire en fonction d'une durée de retour à la voie de circulation prédéterminée, selon la formule :

[Math 4] $VLAT = AM + TR$

Avec :
AM : marge d'accélération latérale du véhicule 11,
TR : durée de retour à la voie de circulation prédéterminée.

Par exemple, si une vitesse élevée du véhicule 12 nécessite une durée de retour à la voie de circulation faible, par exemple de l'ordre d'une ou deux secondes, pour une marge d'accélération calculée, cela impliquera une augmentation de la vitesse latérale du véhicule 11.

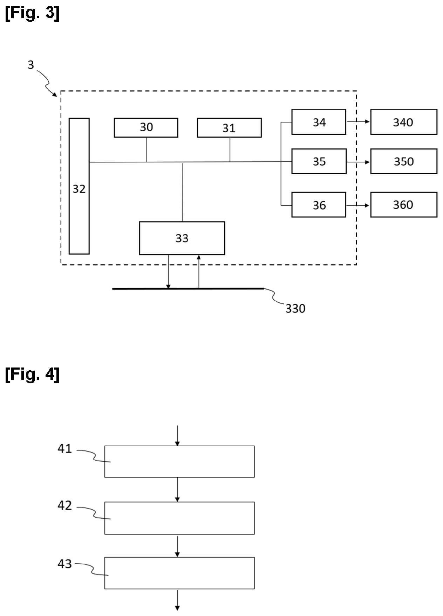

La figure 3 illustre schématiquement un dispositif 3 configuré pour le contrôle d'une source lumineuse d'un véhicule, par exemple la source lumineuse 13 du véhicule 11, selon des exemples de réalisation particuliers et non limitatifs de la présente invention. Le dispositif 3 correspond par exemple à un dispositif embarqué dans le véhicule 11, par exemple un calculateur.

Le dispositif 3 est par exemple configuré pour la mise en œuvre des opérations décrites en regard de la figure 1 et/ou des étapes du procédé décrit en regard de la figure 3. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

**Selon** différents exemples de réalisation particuliers et non limitatifs, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage 340, tactile ou non, un ou des haut-parleurs 350 et/ou d'autres périphériques 360 (système de projection) via respectivement des interfaces de sortie 34, 35 et 36. Selon une variante, l'un ou l'autre des dispositifs externes est intégré au dispositif 3.

La figure 4 illustre un organigramme des différentes étapes d'un procédé de de contrôle d'un retour d'un véhicule, par exemple le véhicule 11 sur une voie de circulation pendant un changement de voie de circulation, selon un exemple de réalisation particulier et non limitatif de la présente invention. Le changement de voie de circulation est initié par un système de changement semi-automatique de voie de circulation. Le procédé est par exemple mis en œuvre par un dispositif embarqué dans le véhicule 11 ou par le dispositif 3 de la figure 3.

Dans une première étape 41, une accélération centripète du véhicule est déterminée en fonction d'un rayon de courbure de la voie de circulation et d'une vitesse longitudinale courante du véhicule.

Dans une deuxième étape 42, une marge d'accélération latérale pour le retour est déterminée par calcul d'une différence entre l'accélération centripète et une valeur de seuil de confort.

Dans une troisième étape 43, la vitesse longitudinale courante du véhicule est contrôlée en fonction de la marge d'accélération latérale.

Selon une variante, les variantes et exemples des opérations décrits en relation avec les figures 1 et 2 s'appliquent aux étapes du procédé de la figure 4.

Bien entendu, la présente invention ne se limite pas aux exemples de réalisation décrits ci-avant mais s'étend à un procédé de contrôle d'un retour d'un véhicule sur une voie de circulation pendant un changement de voie de circulation initié par un système de changement semi-automatique de voie de circulation qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule à moteur terrestre, comprenant le dispositif 3 de la figure 3.

## Revendications

1. Procédé de contrôle d'un retour d'un véhicule (11) sur une voie de circulation pendant un changement de voie de circulation initié par un système de changement semi-automatique de voie de circulation, ledit procédé étant mis en œuvre par un processeur et comprenant les étapes suivantes :
- détermination (41) d'une accélération centripète dudit véhicule (11) en fonction d'un rayon de courbure de ladite voie de circulation et d'une vitesse longitudinale courante dudit véhicule (11) ;
- détermination (42) d'une marge d'accélération latérale pour ledit retour par calcul d'une différence entre ladite accélération centripète et une valeur de seuil de confort ; et
- contrôle (43) de contrôle de ladite vitesse longitudinale courante dudit véhicule (11) en fonction de ladite marge d'accélération latérale.

2. Procédé selon la revendication 1, dans lequel lorsque ladite marge d'accélération latérale est positive, ledit contrôle correspond à une augmentation de ladite vitesse longitudinale courante dudit véhicule (11) jusqu'à que la marge d'accélération latérale soit nulle.

3. Procédé selon la revendication 1 ou 2, dans lequel lorsque ladite marge d'accélération latérale est négative, ledit contrôle correspond à une diminution de ladite vitesse longitudinale courante dudit véhicule (11) jusqu'à que la marge d'accélération latérale soit nulle.

4. Procédé selon l'une des revendications précédentes, dans lequel lorsque ladite marge d'accélération latérale est nulle, ledit contrôle correspond à un maintien de ladite vitesse longitudinale courante dudit véhicule (11).

5. Procédé selon l'une des revendications précédentes, dans lequel la valeur dudit seuil de confort est 2,5 m/s².

6. Procédé selon l'une des revendications précédentes, dans lequel ladite accélération centripète AC est calculée selon la formule : $AC = \frac{{VLONG}^{2}}{R}$ avec :
VLONG : ladite vitesse longitudinale courante dudit véhicule (11) ; et
R : ledit rayon de courbure de ladite voie de circulation.

7. Programme d'ordinateur comportant des instructions de code de programme pour la mise en œuvre du procédé selon l'une quelconque des revendications précédentes, lorsque ledit programme est exécuté par un processeur.

8. Support d'enregistrement lisible par un ordinateur sur lequel est enregistré un programme d'ordinateur comprenant des instructions pour l'exécution des étapes du procédé selon l'une quelconque des revendications 1 à 6.

9. Dispositif (3) de contrôle d'un retour à une voie de circulation d'un véhicule (11), ledit dispositif (3) comprenant une mémoire (31) associée à au moins un processeur (30) configuré pour la mise en œuvre des étapes du procédé selon l'une des revendications 1 à 6.

10. Véhicule (11) comprenant un dispositif (3) selon la revendication 9.
